Europäisches Patentamt

European Patent Office

Office européen des brevets

(19)

(11) **EP 0 741 240 B1**

(12) **FASCICULE DE BREVET EUROPEEN**

(45) Date de publication et mention
de la délivrance du brevet:
**18.11.1998 Bulletin 1998/47**

(51) Int Cl.⁶: **F02C 9/26**

(21) Numéro de dépôt: **96400932.8**

(22) Date de dépôt: **02.05.1996**

(54) **Clapet de distribution de fluide**

Verteilventil für Fluide

Fluid distribution valve

(84) Etats contractants désignés:
**DE FR GB**

(30) Priorité: **03.05.1995 FR 9505257**

(43) Date de publication de la demande:
**06.11.1996 Bulletin 1996/45**

(73) Titulaire: **SOCIETE NATIONALE D'ETUDE ET DE
CONSTRUCTION DE MOTEURS D'AVIATION,
"S.N.E.C.M.A."
75015 Paris (FR)**

(72) Inventeurs:
• **Lavie, Alain François Jean
  91330 Yerres (FR)**
• **Maillard, Claude Marcel Joseph
  77870 Vulaines sur Seine (FR)**

(56) Documents cités:
**EP-A- 0 313 502**

## Description

La présente invention concerne un clapet de distribution de fluide interposé entre une première enceinte et une deuxième enceinte et destiné à réaliser sélectivement la mise en communication mutuelle et l'isolement des deux enceintes, ledit clapet comportant un corps de clapet dans la cavité interne duquel est montée une douille présentant une pluralité d'orifices débouchant dans une conduite ménagée dans ledit corps de clapet et destinée à délivrer du fluide à ladite deuxième enceinte, un piston monté coulissant dans ladite douille et susceptible d'obturer ou de dégager lesdits orifices, ledit piston partageant ladite cavité interne en une chambre d'alimentation communiquant avec ladite première enceinte et en une chambre de tarage, ledit piston étant actionné sous l'effet des pressions (Pa, Pt) régnant dans ladite chambre d'alimentation et ladite chambre de tarage et étant chargé par des moyens élastiques, de telle manière que ledit piston obture lesdits orifices en l'absence de pression dans ladite chambre d'alimentation. Un tel type de clapet est divulgué par exemple, dans le document EP-A-313 502.

Ce type de clapet est utilisé notamment dans l'alimentation en carburant des dispositifs de réchauffe des turbomachines.

L'alimentation en carburant de ces dispositifs nécessite une pompe, un régulateur de débit de ce carburant et des systèmes d'injection. Entre ces derniers et le régulateur, il est nécessaire d'interposer des clapets d'isolement des injecteurs, du fait que les dispositifs de réchauffe ne sont utilisés qu'à la demande. Ce sont ces clapets d'isolement qui font l'objet de la présente invention.

Dans les clapets actuellement utilisés, la chambre de tarage est en communication avec une zone située en aval de la turbine du moteur. La chambre de tarage est ainsi alimentée en air. Comme le piston est noyé sur une face par du carburant et sur l'autre face par de l'air, il est indispensable d'interposer entre la douille et le piston un joint d'étanchéité. Il est à noter, en outre, que la pression du carburant peut atteindre 75 bars, tandis que la pression dans la chambre de tarage est inférieure à 10 bars, et en général comprise entre 5 et 7 bars.

Il est logique de penser que la défaillance du joint d'étanchéité peut entraîner des incidents très fâcheux. En effet, la pression du carburant étant nettement supérieure à la pression de l'air, il y aurait des fuites de carburant vers l'aval des turbines, lorsque la réchauffe fonctionne. Ceci provoquerait des surchauffes locales importantes dans le moteur.

Le but de la présente invention est d'éliminer ces risques, en supprimant le circuit d'alimentation en air de la chambre de tarage.

L'invention atteint son but par le fait qu'il est prévu un venturi dans la conduite de délivrance de fluide et par le fait que la chambre de tarage communique avec le col dudit venturi par une deuxième conduite.

Grâce à cette disposition, les deux faces du piston baignent dans le carburant délivré. Les fuites éventuelles dues au défaut d'étanchéité sont drainées vers la deuxième enceinte. La nouvelle disposition permet en outre une réduction de masse en raison de l'absence de canalisation d'alimentation en air basse pression de la chambre de tarage.

En outre, la pression de tarage liée au venturi varie très peu et peut être considérée comme constante.

Afin d'obtenir un niveau de pression dans la chambre de tarage de même niveau qu'avec l'air dans la définition actuelle, le diamètre au col du venturi est de l'ordre de quelques millimètres.

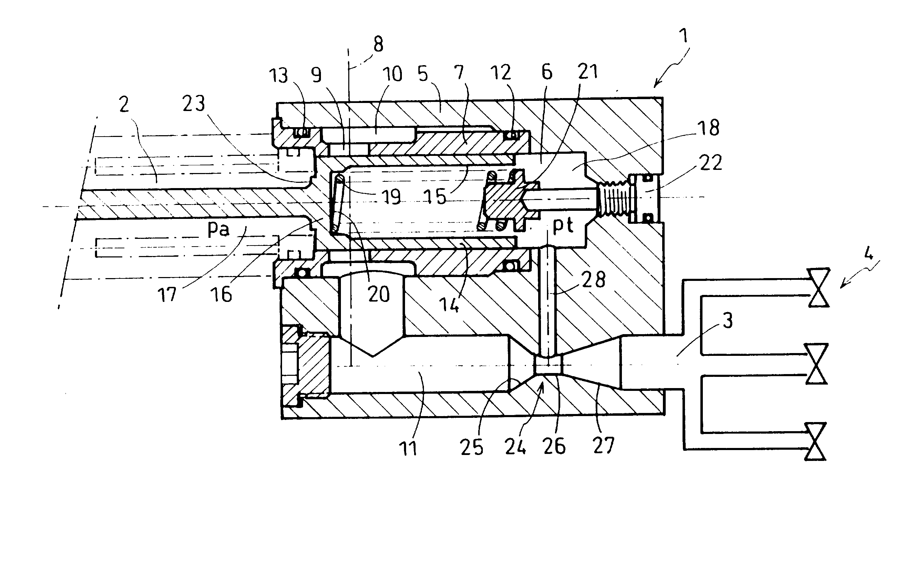

D'autres avantages et caractéristiques de l'invention ressortiront à la lecture de la description suivante faite à titre d'exemple et en référence au dessin annexé dans lequel :

la figure unique est une coupe axiale d'un clapet conforme à l'invention.

Sur cette figure, on a représenté par la référence 1 un clapet d'isolement interposé en une première enceinte 2 et une deuxième enceinte 3. La première enceinte 2 est, par exemple, une conduite d'amenée d'un débit de carburant, et la deuxième enceinte 3 un circuit de délivrance de carburant vers des injecteurs 4 disposés dans une chambre de post-combustion d'un turboréacteur. Le clapet 1 comporte un corps de clapet 5 qui présente une cavité interne cylindrique 6 à l'intérieur de laquelle est montée une douille 7 qui présente dans un plan radial 8 une pluralité d'orifices 9. Les orifices 9 débouchent dans un canal annulaire 10 ménagé dans la paroi externe de la douille 7. Ce canal 10 communique avec la deuxième enceinte 3 par une conduite de délivrance 11 ménagée dans la paroi du corps de clapet 5. Des joints d'étanchéité 12 et 13 sont interposés entre la douille 7 et le corps de clapet 5.

Un piston 14 est monté coulissant dans la douille 7. Ce piston 14 comporte une jupe 15 pour le guidage du piston 14 dans la douille 7 et une paroi frontale 16. La paroi frontale 16 partage la cavité interne libre du corps de clapet 5 en une chambre d'alimentation 17 de carburant en communication permanente avec la première enceinte 2, et une chambre de tarage 18. Un ressort de compression 19 est disposé dans la chambre de tarage 18. Ce ressort est en appui sur la face interne 20 de la paroi frontale 16 et sur une pièce d'appui 21 portée par une vis de réglage de tension 22 montée dans le corps de clapet 5. Le ressort 19 a tendance à repousser le piston 14 vers la gauche sur le dessin, afin que le piston 14 obture les orifices 9 de la douille 7. La face externe 23 de la paroi frontale 16 du piston 14 est soumise à la pression d'alimentation Pa de la chambre d'alimentation 17, tandis que l'autre face 20 du piston 14 est soumise à la pression Pt régnant dans la chambre de tarage 18 et à la force F exercée par le ressort 19.

En désignant par S la surface de la section du piston 14, le piston 14 est en équilibre lorsque l'on a :

$$Pa \times S = Pt \times S + F.$$

Comme on le voit sur le dessin, la conduite de délivrance 11 comporte un venturi 24 défini par un convergent 25, un col de venturi 26 et un divergent 27. De plus, une deuxième conduite 28 relie la chambre de tarage 18 au col de venturi 26.

La pression régnant dans la chambre de tarage 18 est ainsi égale à la pression Pc régnant au col de venturi 26, qui est inférieure à la pression régnant dans la chambre d'alimentation 17.

Les conditions de pression dans le col de venturi 26 sont définies par la formule suivante :

$$D = K \times ((Pa - Pc)/w)^{1/2}$$

dans laquelle :

D     est le débit de carburant

K     est le coefficient caractéristique du venturi

Pa     est la pression du carburant dans la chambre d'alimentation 17

Pc     est la pression au col de venturi 26

w     est la masse spécifique du carburant.

Le diamètre D du col de venturi 26 est de quelques millimètres.

La valeur du diamètre D est calculée de telle manière que la pression Pc au col venturi soit de l'ordre de 5 à 6 bars, ce qui correspond à la valeur de la pression de tarage dans les clapets d'isolement actuels dans lesquels la chambre de tarage est en communication avec une zone située en aval de la turbine d'un turboréacteur. Elle est également calculée pour que la perte de charge dans la conduite de délivrance 11 par suite de la présence du venturi 24 reste dans les limites acceptables.

Grâce à la disposition adoptée, les deux faces 20 et 23 du piston 14 sont noyées dans du carburant. On peut donc supprimer le joint d'étanchéité dynamique qui est habituellement disposé entre la jupe 15 du piston 14 et la douille 7. En cas de jeu important entre la jupe 15 et la douille 7, les fuites de carburant s'écouleront par la deuxième conduite 28 vers le divergent 27.

Le clapet décrit ci-dessus peut avantageusement être utilisé dans le circuit de distribution de carburant d'une chambre de réchauffe d'un turboréacteur. Mais il peut également être utilisé dans toute autre application et pour la délivrance de tout type de fluide liquide ou gazeux.

**Revendications**

1.     Clapet de distribution de fluide interposé entre une première enceinte (2) et une deuxième enceinte (3) et destiné à réaliser sélectivement la mise en communication mutuelle et l'isolement des deux enceintes (2, 3), ledit clapet (1) comportant un corps de clapet (5) dans la cavité interne (6) duquel est montée une douille (7) présentant une pluralité d'orifices (8) débouchant dans une conduite (11) ménagée dans ledit corps de clapet (5) et destinée à délivrer du fluide à ladite deuxième enceinte (3), un piston (14) monté coulissant dans ladite douille (7) et susceptible d'obturer ou de dégager lesdits orifices (8), ledit piston partageant ladite cavité interne en une chambre d'alimentation (17) communiquant avec ladite première enceinte (1) et en une chambre de tarage (18), ledit piston (14) étant actionné sous l'effet des pressions (Pa, Pt) régnant dans ladite chambre d'alimentation (17) et ladite chambre de tarage (18) et étant chargé par des moyens élastiques (19), de telle manière que ledit piston (14) obture lesdits orifices (8) en l'absence de pression dans ladite chambre d'alimentation (17),
caractérisé par le fait qu'il est prévu un venturi (24) dans la conduite (11) de délivrance de fluide et par le fait que la chambre de tarage (18) communique avec le col (26) dudit venturi (24) par une deuxième conduite (28).

**Patentansprüche**

1.     Verteilventil für Fluide zwischen einem ersten abgeschlossenen Raum (2) und einem zweiten abgeschlossenen Raum (3), das dazu bestimmt ist, wahlweise die gegenseitige Verbindung der beiden abgeschlossenen Räume (2, 3) miteinander oder ihre Trennung voneinander herzustellen, wobei dieses Ventil (1) aus einem Ventilkörper (5) besteht, in dessen Innenhohlraum (6) eine Buchse (7) eingebaut ist, die mehrere Öffnungen (8) aufweist, die in eine in dem genannten Ventilkörper (5) ausgeführte Leitung (11) münden, die dazu bestimmt ist, dem genannten zweiten abgeschlossenen Raum (3) Fluid zuzuführen, und in dieser Buchse (7) ein Kolben (14) gleitend angebracht ist, der die genannten Öffnungen (8) verschließen oder freigeben kann, wobei dieser Kolben diesen Innenhohlraum in eine Zuführkammer (17), die mit dem genannten ersten abgeschlossenen Raum (2) kommuniziert, und in eine Regulierungskammer (18) teilt, wobei dieser Kolben (14) unter der Wirkung des in dieser Zuführkammer (17) und dieser Regulierungskammer (18) herrschenden Drucks (Pa bzw. Pt) betätigt wird und durch Federmittel (19) belastet wird, so daß dieser Kolben (14) die genannten Öffnungen (8) verschließt, wenn in der genannten Zuführkammer (17) kein Druck herrscht,
**dadurch gekennzeichnet, daß** in der Fluidzuführleitung (11) ein Venturirohr (24) vorgesehen ist und daß die Regulierungskammer (18) durch eine zweite Leitung (28) mit der Verengung (26) dieses Venturirohrs (24) in Verbindung steht.

## Claims

1. Fluid distribution valve inserted between a first enclosure (2) and a second enclosure (3) and intended selectively to place the two enclosures (2, 3) in communication with each other and to isolate them from each other, the said valve (1) comprising a valve body (5), in the internal cavity (6) of which there is mounted a sleeve (7) which has a number of orifices (8) opening into a duct (11) formed in the said valve body (5) and intended to deliver fluid to the said second enclosure (3), a piston (14) mounted so that it can slide in the said sleeve (7) and capable of covering or of uncovering the said orifices (8), the said piston splitting the said internal cavity into a supply chamber (17) communicating with the said first enclosure (2) and a calibration chamber (18), the said piston (14) being actuated under the effect of pressures (Pa, Pt) prevailing in the said supply chamber (17) and the said calibration chamber (18) and being loaded by elastic means (19) in such a way that the said piston (14) covers the said orifices (8) when there is no pressure in the said supply chamber (17), characterized in that there is a venturi (24) in the fluid-delivery duct (11) and in that the calibration chamber (18) communicates with the throat (26) of the said venturi (24) via a second duct (28).